# EUROPÄISCHE PATENTSCHRIFT

(11) **EP 0 698 838 B1**
(45) Veröffentlichungstag und Bekanntmachung des Hinweises auf die Patenterteilung: **02.02.2000**
(21) Anmeldenummer: 95112188.8
(22) Anmeldetag: 03.08.1995
(51) Int. Cl.: G05D 16/06, F16K 47/08

(54) **Druckminderer**
Pressure reducing valve
Réducteur de pression

(30) Priorität: 26.08.1994 DE 9413833 U
(43) Veröffentlichungstag der Anmeldung: 28.02.1996
(73) Patentinhaber: HANS SASSERATH & CO KG, D-41352 Korschenbroich (DE)
(72) Erfinder: Hecking, Willi, D-41238 Mönchengladbach (DE)
(74) Vertreter: Wolgast, Rudolf, Dipl.-Chem. Dr.

(56) Entgegenhaltungen:
- DE-A- 2 034 030
- DE-A- 3 717 128
- DE-B- 1 067 386
- DE-B- 1 123 675
- FR-A- 1 561 483
- US-A- 3 131 717

## Beschreibung

Die Erfindung betrifft einen Druckminderer nach dem Oberbegriff des Schutzanspruchs 1.

Bei Druckminderern tritt beim Durchlauf der Flüssigkeit Kavitation auf. Bei Kavitation entstehen durch Strömungsabriß kleine Luftbläschen. Dies ist mit Geräuschentwicklung verbunden. Um diese Geräuschentwicklung zu verhindern, wird bei bekannten Druckminderern ein Zerstrahlungssieb aus Metall an den Ventilauslaß angenietet. Das Annieten dieser Zerstrahlungssiebe ist nur mit erheblichem maschinellen Aufwand zu bewerkstelligen.

Durch die US-PS 3 131 717 ist ein Druckminderer für ein gasförmiges Medium bekannt. Der Druckminderer hat ein Ventil zwischen einem Einlaß und einem Auslaß. Das Ventil wird durch eine Membran gesteuert, welche von dem Auslaßdruck beaufschlagt wird. Wenn das Gas durch die Ventilöffnung mit hoher Geschwindigkeit hindurchströmt treten unerwünschte dynamische Druckeffekte auf, welche auf die Membran wirken und eine genaue Druckregelung beeinträchtigen. Um diese dynamische Druckeffekte zu vermeiden, werden Strömungsberuhigungsmittel vorgesehen, durch welche die Gasströmung verlangsamt wird, bevor der Gasdruck auf die Membran wirkt, so daß nur der statische Druck des Gases auf die Membran wirksam wird. Die Strömungsberuhigungsmittel werden durch Verlängerung des Strömungswegs zwischen der Ventilöffnung und der Membran realisiert, wobei die Querschnittsöffnung des verlängerten Strömungswegs in Strömungsrichtung zunimmt. In einer Ausführung bestehen die Strömungsberuhigungsmittel aus mehreren konzentrischen Zylinderelemente, welche alternierend an zwei gegenüberliegenden Wandungen angebracht sind, sich in Richtung der gegenüberliegenden Wandung erstecken und in einem bestimmten Abstand von der gegenüberliegenden Wandung enden. Dabei sind die Zylinderelemente so angeordnet, daß sowohl der Abstand zwischen den einzelnen Zylinderelementen als auch der Abstand zwischen den Zylinderelementen und der gegenüberliegenden Wandung in Strömungsrichtung zunimmt. In dieser Art wird ein labyrinthförmiger Stömungsweg erhalten, dessen Querschnittsöffnung in Strömungsrichtung zunimmt.

Aufgabe der Erfindung ist es, die Herstellung des Druckminderers zu vereinfachen.

Erfindungsgemäß wird die Aufgabe bei Druckminderern nach dem Oberbegriff des Schutzanspruchs 1 durch die im Kennzeichen des Anspruchs 1 angegebenen Maßnahmen gelöst.

Durch das Anformen der strömungsteilenden Mittel an dem Gehäuse, also dadurch, daß die strömungsaufteilenden Mittel mit dem Gehäuse ein zusammenhängendes Bauteil bilden, entfällt die Notwendigkeit des Annnietens, wodurch die Fertigung vereinfacht und die Betriebssicherheit des Druckminderers erhöht wird. Die strömungsaufteilenden Mittel zur Kavitationsverhinderung weisen eine Vielzahl von axialen Stiften auf. Diese Stifte sind vorteilhalterweise um den Ventilsitz und dem Drosselkörper herum in mehreren konzentrischen Kränzen angeordnet. Die Stifte des einen Kranzes sind auf Lücke zu den Stiften des jeweils benachbarten Kranzes versetzt angebracht.

Vorteilhafterweise bestehen die strömungsaufteilenden Mittel mit dem Gehäuse des Druckminderers aus einem integralem Kunststoffspritzteil.

Überraschenderweise zeigte sich, daß die strömungsaufteilenden Mittel zur Kavitationsverhinderung nicht notwendig von Zerstrahlungssieben gebildet werden müssen, sondern auch aus Stiften gebildet sein können, die um den Ventilsitz und Drosselkörper angeordnet sind.
- Fig. 1: zeigt einen Längsschnitt durch einen erfindungsgemäßen Druckminderer
- Fig. 2: zeigt einen Querschnitt durch den Druckminderer

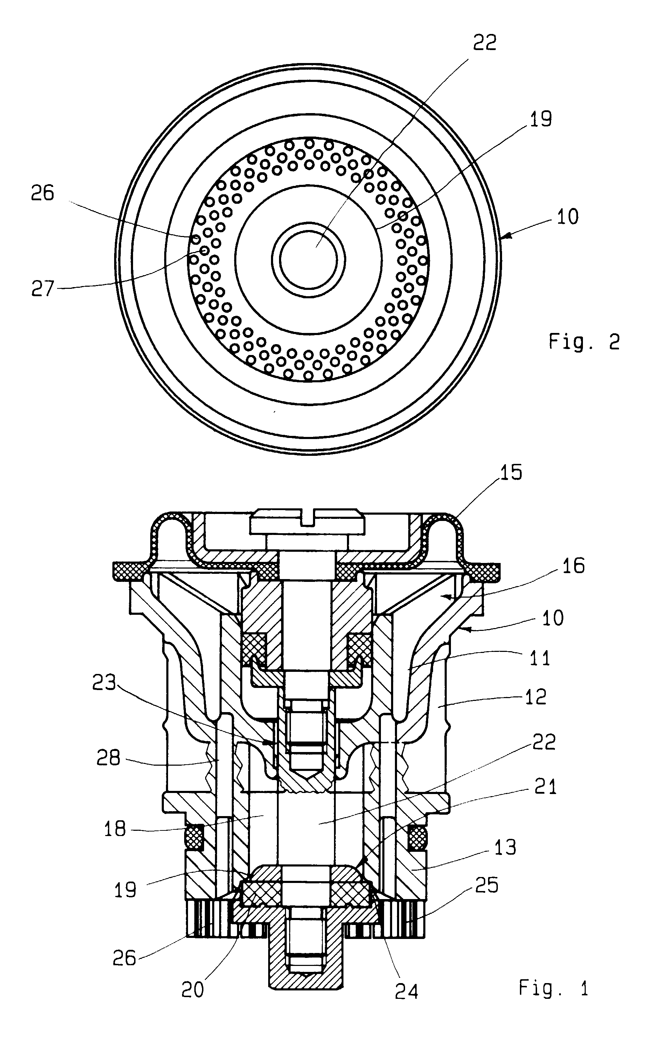

In Fig. 1 ist ein Längsschnitt eines Druckminderers dargestellt. Das Gehäuse 10 des Druckminderers besteht aus einem schalenförmigen Körper 11, der über Stege 12 mit einem Ventilsitzteil 13 verbunden ist. Der schalenförmige Körper 11 bildet zusammen mit einer Membran 15, die den Körper abschließt, eine Druckkammer 16. Dieses Gehäuse 10 sitzt abdichtend in einem (nicht dargestellten) Armaturengehäuse, das Ein- und Auslaßkanäle enthält.

Flüssigkeit strömt zwischen den Stegen 12 zu einem Durchgangskanal 18 in dem Ventilsitzteil 13. Das Ventilsitzteil 13 bildet am auslaßseitigen Ende des Durchgangkanals 18 einen Ventilsitz 19. Der Ventilsitz 19 wirkt mit einem Drosselkörper 20 zur Bildung eines Ventils 21 zusammen. Der Drosselkörper 20 sitzt stromabwärts von dem Ventilsitz 19 an einem Ventilstößel 22. Der Ventilstößel 22 wird in einer Führung 23 geführt und verbindet die Membran 15 mit dem Drosselkörper 20. Zusammen mit dem Ventilsitz 19 bildet der Drosselkörper 20 am Ausgang des Durchgangskanals 18 einen Drosselspalt 24. Das Ventil 21 ist in Fig.1 in geschlossener Stellung gezeigt. Die aus dem Ventil 21 austretende Flüssigkeit wird zur Verhinderung von Kavitation durch die am Gehäuse 10 des Druckminderers angeformten strömungsaufteilenden Mittel 25 gedrückt.

Das Gehäuse 10 und die strömungsaufteilenden Mittel 25 sind als ein integrales Kunststoffspritzteil ausgebildet. In mehreren Kränzen angeordnet sind axiale Stifte 26, 27 an das Gehäuse 10 angeformt. Die Stifte 26 sind so angeordnet, daß jeweils der Stift des einen Stiftkranzes auf Lücke zu den Stiften des jeweils benachbarten Kranzes um den Ventilsitz 19 und Drosselkörper 20 angeordnet ist.

Der Ausgangsdruck der aus dem Drosselspalt 24 austretende Flüssigkeit wird über einen Druckrückführungskanal 28 in die Druckkammer 16 geführt. Oberhalb der Membran 15 ist eine nicht gezeigte Feder angeordnet, die für einen geeigneten Gegendruck sorgt. Je nach Druck auf die Membran 15, wird der Drosselkörper 20 über den Ventilstößel 22 gehoben oder gesenkt. Damit wird der Drosselspalt 24 verkleinert oder vergrößert. Entsprechend steigt oder sinkt der Druck der aus dem Ventil 21 austretenden Flüssigkeit.

Fig. 2 zeigt einen Querschnitt des Druckminderers in der Höhe des Ventilsitzes 19 und des Drosselkörpers 20.

## Patentansprüche

1. Druckminderer enthaltend:
a) ein Gehäuse mit
i) einem schalenförmigen Körper (11), der durch eine Membran (15) abgeschlossen ist und eine Druckkammer (16) bildet;
ii) einem Ventilsitzteil (13) mit einem Durchgangskanal (18) und einem Ventilsitz (19) am auslaßseitigen Ende des Durchgangkanals (18);
iii) Stege (12), die den schalenförmigen Körper (11) mit dem Ventilsitzteil (13) verbinden;
b) einen Drosselkörper (20), auslaßseitig von dem Ventilsitz (19), der mit dem Ventilsitz einen Drosselspalt (24) bildet;
c) einen Ventilstößel (22), der mit dem Drosselkörper (20) und der Membran (15) verbunden ist;
d) am Ventilauslaß angeordnete strömungsaufteilende Mittel zur Kavitationsverhinderung;
e) einen Druckrückführungkanal (28), der den Ventilausgangsdruck in die Druckkammer (16) zurückführt,
**dadurch gekennzeichnet, daß** die strömungsaufteilenden Mittel (25) eine Vielzahl von an dem Gehäuse des Druckminderers angeformten axialen Stiften (26) aufweisen.

2. Vorrichtung nach Anspruch 1 **dadurch gekennzeichnet, daß** die strömungsaufteilenden Mittel (25) mit dem Gehäuse des Druckminderers aus einem integralem Kunststoffspritzteil bestehen.

3. Vorrichtung nach Anspruch 1 oder 2, **dadurch gekennzeichnet, daß** die Stifte (26) um den Ventilsitz (19) und dem Drosselkörper (20) herum in mehreren konzentrischen Kränzen derart angeordnet sind, daß die Stifte des einen Kranzes (26) auf Lücke zu den Stiften (27) des jeweils benachbarten Kranzes versetzt angebracht sind.

4. Vorrichtung nach Anspruch 1 **dadurch gekennzeichnet, daß** der Ventilstößel (22) in einer Führung (23) geführt wird.

## Claims

1. Pressure reducer comprising:
(a) a housing having
i) a cup-shaped body (11), which is closed by a diaphragm (15) and which forms a pressure chamber (16);
ii) a valve seat element (13) having a passage (18) and a valve seat (19) on the outlet side of the passage (18);
iii) webs (12), which connect the cup-shaped body (11) to the valve seat element (13);
(b) a flow restrictor (20) located on the outlet side of the valve seat (19) and forming a restrictor gap (24) together with the valve seat;
(c) a valve tappet (22), which is connected to the flow restrictor (20) and the diaphragm (15);
(d) flow partition means arranged at the valve outlet for preventing cavitation;
(e) a pressure return passage (28), which returns the valve outlet pressure into the pressure chamber (16),
**characterized in that** the flow partition means (25) have a plurality of axial pins (26) integral with the housing.

2. Arrangement as set forth in claim 1, **characterized in that** the flow partition means (25) consist of an integral synthetic moulded part together with the housing of the pressure reducer.

3. Arrangement as set forth in claims 1 or 2, **characterized in that** the pins (26) are arranged around the valve seat (19) and the flow restrictor (20) in several concentric rings in such a manner that the pins of one ring (26) are arranged offset with regard to the pins (27) of the adjacent rings.

4. Arrangement as set forth in claim 1, **characterized in that** the valve tappet (22) is guided in a guide (23).

## Revendications

1. Détendeur comprenant :
a) un boîtier muni de
i) un corps en forme de cuvette (11) fermé par une membrane (15) et formant une chambre de compression (16) ;
ii) un élément de siège de soupape (13) muni d'un canal de passage (18) et d'un siège de soupape (19) situé à l'extrémité du canal de passage (18) située du côté de la sortie ;
iii) des traverses (12) reliant le corps en forme de cuvette (11) à l'élément de siège de soupape (13) ;
b) un dispositif d'étranglement (20) situé du côté de la sortie du siège de soupape (19) formant avec le siège de soupape une fente d'étranglement (24) ;
c) un poussoir de soupape (22) relié au dispositif d'étranglement (20) et à la membrane (15) ;
d) des moyens de partage du courant destinés à empêcher toute cavitation disposés à la sortie de la soupape ;
e) un canal de retour de pression (28) ramenant la pression de la sortie de la soupape dans la chambre de compression (16),
**caractérisé par le fait que** les moyens de partage du courant (25) présentent plusieurs tiges axiales (26) dont la forme est adaptée au boîtier du détendeur.

2. Dispositif selon la revendication 1, **caractérisé par le fait que** les moyens de partage du courant (25) se composent avec le boîtier du détendeur d'une pièce de plastique intégrale moulée par injection.

3. Dispositif selon la revendication 1 ou 2, **caractérisé par le fait que** les tiges (26) sont disposées autour du siège de soupape (19) et du dispositif d'étranglement (20) en plusieurs couronnes concentriques de telle façon que les tiges de l'une des couronnes (26) sont placées avec un décalage en étant espacées par rapport aux tiges (27) de la couronne adjacente respectivement.

4. Dispositif selon la revendication 1, **caractérisé par le fait que** le poussoir de soupape (22) est guidé dans un guidage (23).
